# EUROPÄISCHE PATENTSCHRIFT

(11) **EP 0 525 341 B1**
(45) Veröffentlichungstag und Bekanntmachung des Hinweises auf die Patenterteilung: **13.09.1995**
(21) Anmeldenummer: 92109793.7
(22) Anmeldetag: 11.06.1992
(51) Int. Cl.: B60H 1/00, F16D 1/02, F16B 7/04

(54) **Heizungs- und/oder Klimatisierungseinrichtung, insbesondere für Kraftfahrzeuge**
Heating and/or air conditionning device, in particular for motor vehicles
Dispositif de chauffage et/ou climatisation, en particulier pour véhicules automobiles

(30) Priorität: 31.07.1991 DE 9109461 U
(43) Veröffentlichungstag der Anmeldung: 03.02.1993
(73) Patentinhaber: Behr GmbH & Co., D-70469 Stuttgart (DE)
(72) Erfinder: Bendell, Ian, W-7256 Moensheim-Appenberg (DE); Mendte, Martina, W-8056 Neufahrn (DE)
(74) Vertreter: Riedel, Peter, Dipl.-Ing.

(56) Entgegenhaltungen:
- EP-A- 0 008 995
- DE-U- 8 627 710
- DE-U- 9 012 146
- US-A- 2 701 153
- US-A- 2 971 355

## Beschreibung

Die Erfindung betrifft eine Heizungs- und/oder Klimatisierungseinrichtung, insbesondere für Kraftfahrzeuge, der im Oberbegriff des Anspruchs 1 angegebenen Gattung.

Aus dem DE-U- 86 27 710 und DE-U- 89 09 363 (EP-A- 0 411 399) sind Heizungseinrichtungen mit Luftdurchtrittskanälen und darin angeordneten Klappen zur Steuerung des Luftdurchsatzes bekannt. Dabei sind zwei Klappen mittels eines Verbindungsgestänges gekoppelt und gleichsinnig bewegbar. Die bekannten Anordnungen bestehen aus unterschiedlichen Klappen, nämlich einer rechten Klappe und einer linken Klappe - die nicht gegeneinander austauschbar sind - sowie mehreren Teilen eines justierbaren Verbindungsgestänges.

Es ist die Aufgabe der vorliegenden Erfindung, eine Einrichtung der im Oberbegriff des Anspruchs 1 angegebenen Gattung derart weiterzubilden, daß die Zahl der benötigten Einzelteile reduziert und die Montage vereinfacht wird.

Diese Aufgabe wird bei einer Einrichtung der gattungsgemäßen Art durch die kennzeichnenden Merkmale des Anspruchs 1 gelöst.

Die wesentlichen Vorteile der Erfindung sind darin zu sehen, daß die die beiden Klappen und das Verbindungsgestänge bildenden Einzelteile auf zwei identische Teile reduziert wird, die jeweils an den freien Enden der Gestängehälften ineinander gesteckt und in die Lageröffnungen des Gehäuses eingeführt werden. Diese Anordnung reduziert die Werkzeug- und Lagerhaltungskosten und vereinfacht darüber hinaus die Montage, da weniger Arbeitsgänge notwendig sind und Montagefehler vermieden werden.

Gemäß einer vorteilhaften Weiterbildung des Erfindungsgegenstandes, umfassen die Mittel zum formschlüssigen Ineinandergreifen einen im Querschnitt rechteckigen Stift und parallel dazu verlaufend eine rechteckige Öffnung. Um das Einführen des Stiftes in die Öffnung zu erleichtern ist der Stift mit einer trapezförmigen Spitze versehen. Zur Reduzierung des Gewichts ist zweckmäßigerweise das halbe Gestänge als hohle Vierkantwelle ausgebildet. Diese Vierkantwelle besitzt wechselseitig entgegengesetzte Öffnungen, wobei zwischen diesen Öffnungen orthogonal zur Wellenachse verlaufende Stege angeordnet sind, so daß die Vierkantwelle im Längsschnitt eine Mäanderform aufweist. Eine solche Anordnung bietet sehr große Stabilität bei geringem Materialeinsatz.

Zwischen der Vierkantwelle und der Klappe ist ein als Lagerzapfen dienender Abschnitt angeordnet, der in einer gehäuseseitigen Lageröffnung aufgenommen ist. Um die axiale Lage der Klappenanordnung zu sichern, ist auf der der Vierkantwelle benachbarten Seite des Lagerzapfens, mindestens ein radialer Vorsprung vorgesehen. Dieser Vorsprung erstreckt sich parallel zur Wand des Gehäuses oder Luftführungskanals, so daß zu einer Seite der Wand der Klappenkörper liegt und an der anderen Seite der Wand sich der radiale Vorsprung befindet. Vorzugsweise sind zwei diametral gegenüberliegende Vorsprünge vorhanden, die sich in Richtung der Klappenebene erstrecken. Zur Montage der Klappe besitzt die Gehäusewand im Bereich der Lageröffnung zwei diametral gegenüberliegende radiale Aussparungen, deren Richtung bezogen auf den Schwenkbereich der Klappen außerhalb dieses Schwenkbereichs liegt.

Auf der dem Gestänge abgewandten Seite jeder Klappe ist ein hohler Lagerzapfen angeformt, welcher in jeweils eine entsprechende Lageröffnung des Gehäuses greift. Den Lagerzapfen hohl auszugestalten hat den Vorteil, daß auf einfache Weise ein Betätigungshebel befestigt werden kann, wobei es selbstverständlich ausreicht, daß in einen der hohlen Lagerzapfen zweier verbundener Klappen ein Betätigungshebel eingreift. Zur Befestigung des Betätigungshebels im Lagerzapfen, weisen diese vorzugsweise Rastmittel auf.

Ein Ausführungsbeispiel der Erfindung ist nachstehend anhand der Zeichnung näher erläutert.

In der Zeichnung zeigt:
- **Fig. 1**: eine Vorderansicht der Klappen mit angespritzter Gestängehälfte;
- **Fig. 2**: eine Ansicht gemäß Pfeil II in Fig. 1;
- **Fig. 3**: einen Schnitt entlang der Linie III-III in Fig. 1;
- **Fig. 4**: einen Schnitt entlang der Linie IV-IV in Fig. 1;
- **Fig. 5**: eine vergrößerte Darstellung der Einzelheit V in Fig. IV;
- **Fig. 6**: eine Anordnung zweier Klappen in entsprechenden Luftführungskanälen;
- **Fig. 7**: einen Ausschnitt einer Gehäusewand im Bereich einer Lageröffnung;
und
- **Fig. 8**: einen Betätigungshebel.

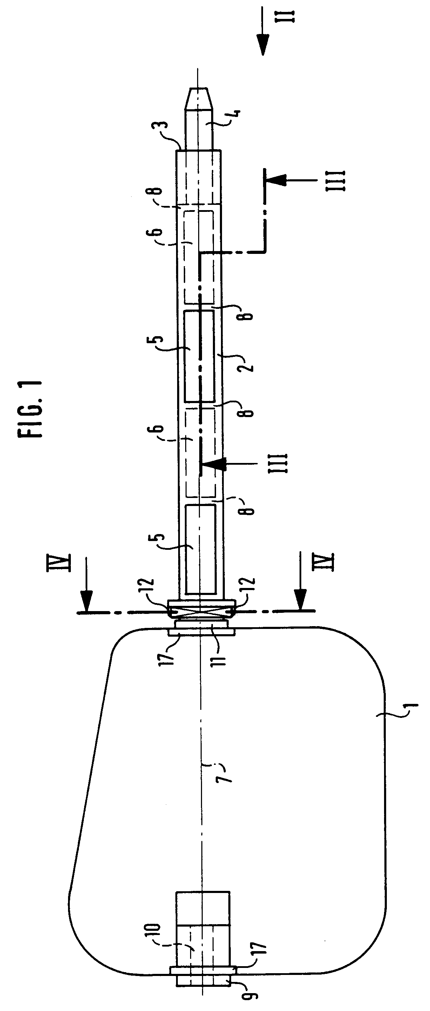

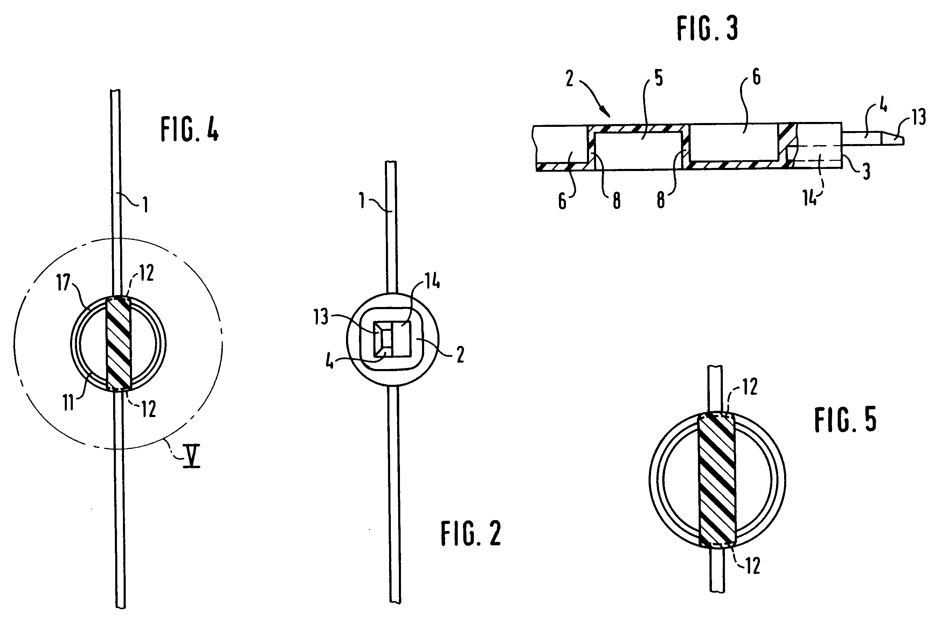

In **Fig. 1** ist eine aus Kunststoff bestehende Klappe 1 mit einer daran angespritzten Vierkantwelle 2 dargestellt, wobei letztere an ihrem freien Ende 3 einen im Querschnitt rechteckigen Stift 4 besitzt. Die Vierkantwelle 2 ist hohl ausgebildet und besitzt wechselseitig entgegengesetzte Öffnungen 5 bzw. 6, mit dazwischen angeordneten orthogonal zur Wellenachse 7 verlaufenden Stegen 8. Wie aus dem Schnitt entlang der Linie III-III, der in Fig. 3 dargestellt ist, deutlich wird, ergibt die Ausbildung der Vierkantwelle 2 mit den Öffnungen 5, 6 und den Stegen 8 eine Mäanderform, die bei geringem Materialeinsatz eine hohe Steifigkeit der Vierkantwelle 2 gewährleistet.

Wie aus Fig. 1 weiterhin zu ersehen ist, besitzt die Klappe 1 auf ihrer der Vierkantwelle 2 entfernt liegenden Seite einen hohlen Lagerzapfen 9, wobei eine Öffnung 10 zur Aufnahme eines Betätigungsgliedes dient. Zwischen der Vierkantwelle 2 und der Klappe 1 ist ein als Lagerzapfen 11 dienender zylindrischer Abschnitt angeordnet und daneben erstrecken sich diametral gegenüberliegende radiale Vorsprünge 12, auf deren Bedeutung später noch näher eingegangen wird.

**Fig. 2** zeigt eine Ansicht gemäß Pfeil II in Fig. 1. Aus dieser Darstellung ist ersichtlich, daß am Ende der Vierkantwelle 2 der Stift 4 mit einer trapezförmigen Spitze 13, die auch aus **Fig. 3** deutlich wird, und daneben eine Öffnung 14 zur Aufnahme des Stiftes des Gegenstückes, angeordnet sind.

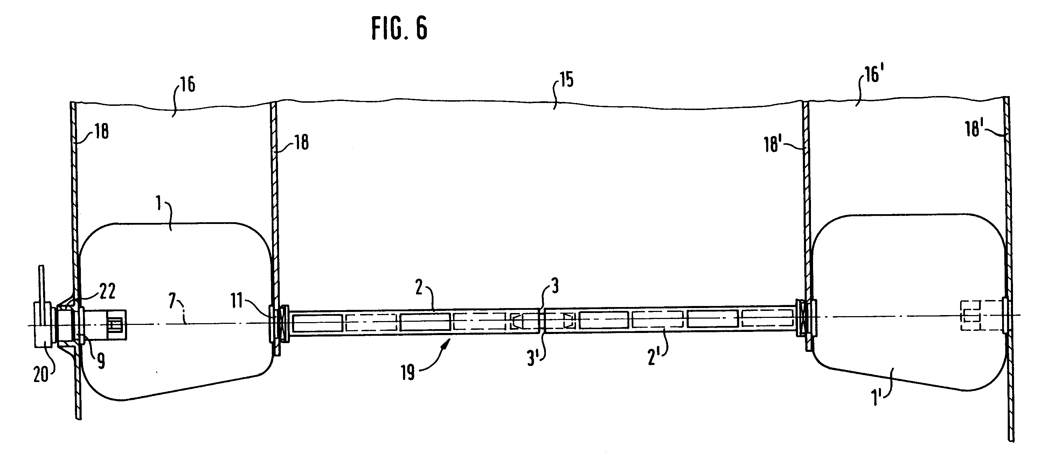

**Fig. 4** zeigt einen Schnitt entlang der Linie IV-IV in Fig. 1. Mit dem Bezugszeichen 11 ist der den Lagerzapfen bildende Abschnitt bezeichnet, hinter dem ein radialer Bund 17 angeordnet ist. Ein solcher radialer Bund 17 ist ebenso aus der Fig. 1 ersichtlich, wobei dieser nicht nur dem Lagerzapfen 11, sondern ebenso dem Lagerzapfen 9 zugeordnet ist. In Richtung der Ebene der Klappe 1 erstrecken sich zwei diametral gegenüberliegende Vorprünge 12, die deutlicher aus **Fig. 5**, welche eine vergrößerte Darstellung der Einzelheit V in Fig. 4 zeigt, ersichtlich ist. Diese radialen Vorsprünge 12 haben die Aufgabe, die axiale Lage der Klappe, bzw. des Gestänges innerhalb des Gehäuses zu sichern, wie dies aus Fig. 6 hervorgeht.

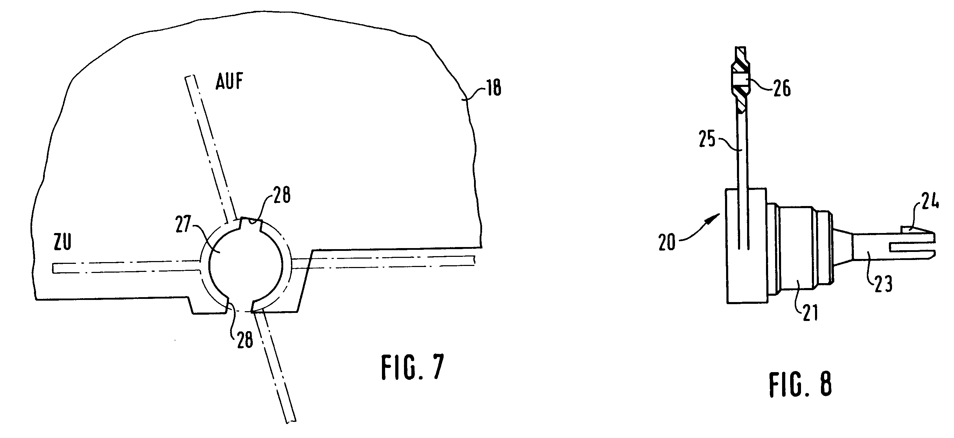

In **Fig. 6** sind in einem Gehäuse 15 einer Heizungs- oder Klimaanlage seitliche Luftführungskanäle 16, bzw. 16' gebildet, in denen jeweils eine Klappe 1 bzw. 1' zur Steuerung des Luftdurchsatzes um eine Längsachse 7 drehbar gelagert sind. Die Luftführungskanäle 16 bzw. 16' sind durch Wandteile 18 bzw. 18' gebildet. Jeweils eine Hälfte eines Gestänges 19, zur Verbindung der beiden Klappen 1 und 1', wird durch die Vierkantwellen 2 bzw. 2' gebildet, wobei die Stifte 4 in die Öffnungen 14 des jeweiligen anderen Endes 3 bzw. 3' greifen. Zur Betätigung der Klappen ist in einen der hohlen Lagerzapfen 9 ein Betätigungshebel 20 gesteckt, welcher als Einzelteil in Fig. 8 dargestellt ist. Der Betätigungshebel 20 besitzt einen zylindrischen Schaft 21 zur Führung in einer aus Fig. 6 ersichtlichen Hülse 22 und einen axialen Vorsprung 23 mit Rastnasen 24 zur Verriegelung des Betätigungshebels 20 innerhalb der Klappe 1. Ein sich radial erstreckender Arm 25 besitzt eine Öffnung 26 zur Einhängung eines Bowdenzugendes.

In **Fig. 7** ist ein Ausschnitt der in Fig. 6 die Klappe 1 rechts begrenzenden Wand 18 dargestellt mit einer Lageröffnung 27, die zur Aufnahme des Lagerzapfens 11 dient. Die Lageröffnung besitzt zwei diametral gegenüberliegende Aussparungen 28, deren Richtung, bezogen auf den zwischen den Endstellungen "auf" und "zu" definierten Schwenkbereich, außerhalb dieses Schwenkbereichs liegt. Diese Aussparungen dienen daher bei der Montage der Klappe 1 zum Durchtritt der radialen Vorsprünge 12, wobei anschließend durch Verschwenken der Klappe innerhalb des definierten Schwenkbereichs, stets eine Anlage der Vorsprünge 12 an der Wand 18 gegeben ist.

## Patentansprüche

1. Heizungs- und/oder Klimatisierungseinrichtung, insbesondere für Kraftfahrzeuge, die ein Gehäuse (15) mit Luftdurchtrittskanälen (16, 16') und darin angeordneten Klappen (1, 1') zur Steuerung des Luftdurchsatzes umfaßt, wobei zwei Klappen (1, 1') mittels eines Verbindungsgestänges (19) gekoppelt und gleichsinnig bewegbar sind, **dadurch gekennzeichnet,** daß die beiden Klappen (1, 1') jeweils einstückig mit einem halben Gestänge ausgebildet und völlig identisch sind, wobei am freien Ende (3) des halben Gestänges (19) Mittel angeformt sind, die im eingebauten Zustand der beiden Klappen (1, 1') formschlüssig ineinandergreifen.

2. Einrichtung nach Anspruch 1, **dadurch gekennzeichnet,** daß die Mittel zum formschlüssigen Ineinandergreifen einen im Querschnitt rechteckigen Stift (4) und prallel dazu verlaufend eine rechteckige Öffnung (14) umfassen.

3. Einrichtung nach Anspruch 2, **dadurch gekennzeichnet,** daß der Stift (4) eine trapezförmige Spitze aufweist.

4. Einrichtung nach einem der vorhergehenden Ansprüche, **dadurch gekennzeichnet,** daß das halbe Gestänge (19) als hohle Vierkantwelle (2) ausgebildet ist.

5. Einrichtung nach Anspruch 4, **dadurch gekennzeichnet,** daß die Vierkantwelle (2) wechselseitig entgegengesetzte Öffnungen (5, 6) besitzt, wobei zwischen diesen Öffnungen (5, 6) orthogonal zur Wellenachse verlaufende Stege (8) angeordnet sind, so daß die Vierkantwelle (2) im Längsschnitt eine Mäanderform aufweist.

6. Einrichtung nach Anspruch 4 oder 5, **dadurch gekennzeichnet,** daß zwischen der Vierkantwelle (2) und der Klappe (1) ein als Lagerzapfen (11) dienender Abschnitt angeordnet ist, der in einer gehäuseseitigen Lageröffnung (27) aufgenommen ist, und auf der der Vierkantwelle (2) benachbarten Seite des Lagerzapfens (11) mindestens ein radialer Vorsprung (12) vorhanden ist, wobei vorzugsweise zwei diametral gegenüberliegende Vorsprünge (12) vorhanden sind, die sich in der Klappenebene erstrecken.

7. Einrichtung nach Anspruch 6, **dadurch gekennzeichnet,** daß die Wand (18) des Gehäuses (15) im Bereich der Lageröffnung (27) zwei diametral gegenüberliegende radiale Aussparungen (28) besitzt, deren Richtung bezogen auf den Schwenkbereich der Klappen (1, 1') außerhalb dieses Schwenkbereichs liegt.

8. Einrichtung nach einem der vorhergehenden Ansprüche, **dadurch gekennzeichnet,** daß auf der dem Gestänge (19) abgewandten Seite jeder Klappe (1, 1') ein hohler Lagerzapfen (9) angeformt ist, welcher in jeweils einer entsprechenden Lageröffnung des Gehäuses (15) gehalten ist.

9. Einrichtung nach Anspruch 8, **dadurch gekennzeichnet,** daß in einen der hohlen Lagerzapfen (9) zweier verbundener Klappen (1, 1') ein Betätigungshebel eingreift, wobei der Lagerzapfen (9) und/oder der Betätigungshebel (20) Rastmittel aufweisen.

10. Einrichtung nach Anspruch 6 oder 8, **dadurch gekennzeichnet,** daß jeder Lagerzapfen (9, 11) mit einem die Lageröffnung überdeckenden radialen Bund (17) versehen ist.

## Claims

1. Heating and or air-conditioning device, in particular for motor vehicles, which comprises a casing (15) having air flow channels (16, 16') and flaps (1, 1') disposed in the channels to control the air throughput, wherein two flaps (1,1') are coupled by means of a connecting rod (19) and can be moved in the same direction, characterised in that the two flaps (1, 1') are, in each case, formed integrally with a half rod and are completely identical, wherein there are formed, on the free end (3) of the half rod (19), means, which, when both the flaps (1,1') are in the installed state, engage in one another in a form-locking manner.

2. Device according to Claim 1, characterised in that the means for the form-locking inter-engagement comprise a pin (4) which is rectangular in cross-section and a rectangular aperture (14) which extends parallel thereto.

3. Device according to Claim 2, characterised in that the pin (4) has a trapezoidal tip.

4. Device according to one of the preceding claims, characterised in that the half rod (19) is formed as a hollow square shaft (2).

5. Device according to Claim 4, characterised in that the square shaft (2) comprises apertures (5,6) which are disposed opposite one another in an alternating manner, wherein, between these apertures (5,6), there are disposed struts (8) extending orthogonally to the axis of the shaft, such that the square shaft (2) is meander-shaped in longitudinal section.

6. Device according to Claim 4 or 5, characterised in that there is disposed, between the square shaft (2) and the flap (1), a section which serves as a bearing projection (11) and which is accommodated in a casing-side bearing aperture (27) and at least one radial projection is provided on the side of the bearing projection (11) which is adjacent the square shaft (2), wherein preferably two diametrally opposite projections (12) are provided which extend in the flap plane.

7. Device according to Claim 6, characterised in that the wall (18) of the casing (15) comprises two diametrally opposite radial recesses (28) in the vicinity of the bearing aperture (27), the direction of which recesses is, in relation to the pivot range of the flaps (1, 1'), outside this pivot range.

8. Device according to one of the preceding claims, characterised in that on the side of each flap (1,1') which faces away from the rod (19), there is formed a hollow bearing projection (9), which is retained in a corresponding bearing aperture of the casing (15) in each case.

9. Device according to Claim 8, characterised in that an actuation lever engages one of the hollow bearing projections (9) of two connected flaps (1,1'), in which connection the bearing projection (9) and/or the actuation lever (20) comprise engaging means.

10. Device according to Claim 6 or 8, characterised in that each bearing projection (9,11) is provided with a radial flange (17) which covers over the bearing aperture.

## Revendications

1. Dispositif de chauffage et/ou de climatisation, en particulier pour véhicules automobiles, qui comprend une enveloppe (15) comportant des canaux (16, 16') de passage d'air à l'intérieur desquels sont disposés des clapets (1, 1') de commande du débit d'air, deux clapets (1, 1') étant accouplés au moyen d'une tringlerie de liaison (19) et étant déplaçables dans le même sens, caractérisé en ce que chacun des deux clapets (1, 1') est monobloc avec une demi-tringle et ils sont totalement identiques, des moyens étant venus de moulage à l'extrémité libre (3) de la demi-tringle (19) et s'emboîtant par complémentarité de formes à l'état de montage des deux clapets (1, 1').

2. Dispositif selon la revendication 1, caractérisé en ce que les moyens destinés à s'emboîter par complémentarité de formes comprennent une tige (4) de section rectangulaire et un trou rectangulaire (14) parallèle à celle-ci.

3. Dispositif selon la revendication 2, caractérisé en ce que la tige (4) comporte une pointe trapézoïdale.

4. Dispositif selon l'une des revendications précédentes, caractérisé en ce que la demi-tringle (19) est conformée en arbre carré creux (2).

5. Dispositif selon la revendication 4, caractérisé en ce que l'arbre carré (2) comporte des ouvertures opposées en alternance (5, 6), des nervures (8) perpendiculaires à l'axe de l'arbre étant disposées entre ces ouvertures (5, 6), de sorte que l'arbre carré (2) présente en coupe longitudinale une forme en grecques.

6. Dispositif selon la revendication 4 ou 5, caractérisé en ce qu'une partie servant de tourillon (11) et disposée entre l'arbre carré (2) et le clapet (1) se loge dans un trou de montage (27) côté boîtier et au moins un bossage radial (12) se trouve sur le côté du tourillon (11) qui est voisin de l'arbre carré (2) et de préférence deux bossages diamétralement opposés (12) sont présents et disposés dans le plan du clapet.

7. Dispositif selon la revendication 6, caractérisé en ce que la cloison (18) de l'enveloppe (15) comporte au voisinage du trou de montage (27) deux échancrures radiales (28) diamétralement opposées et dont l'orientation par rapport à la plage de pivotement des clapets (1, 1') se trouve à l'extérieur de cette plage de pivotement.

8. Dispositif selon l'une des revendications précédentes, caractérisé en ce qu'un tourillon creux (9) venu de moulage sur le côté de chaque clapet (1, 1') qui est tourné à l'opposé de la tringlerie (19) est tenu dans un trou correspondant de montage réalisé dans l'enveloppe (15).

9. Dispositif selon la revendication 8, caractérisé en ce qu'un levier de manoeuvre pénètre dans l'un des tourillons creux (9) de deux clapets assemblés (1, 1'), le tourillon (9) et/ou le levier de manoeuvre (20) comprenant un moyen d'encliquetage.

10. Dispositif selon la revendication 6 ou 8, caractérisé en ce que chaque tourillon (9, 11) est muni d'un collet radial (17) qui recouvre le trou de montage.
